Europäisches Patentamt

European Patent Office

Office européen des brevets

(11) Numéro de publication: **0 465 388 B1**

(12) **FASCICULE DE BREVET EUROPEEN**

(45) Date de publication de fascicule du brevet: **01.03.95**

(51) Int. Cl.⁶: **A62D 3/00**, B09B 3/00, C25C 7/00

(21) Numéro de dépôt: **91420217.1**

(22) Date de dépôt: **02.07.91**

(54) **Procédé de traitement par choc thermique de brasquages usés provenant de cuves d'électrolyse Hall-Heroult.**

(30) Priorité: **04.07.90 FR 9009174**

(43) Date de publication de la demande:
**08.01.92 Bulletin 92/02**

(45) Mention de la délivrance du brevet:
**01.03.95 Bulletin 95/09**

(84) Etats contractants désignés:
**CH DE ES GB GR IT LI NL**

(56) Documents cités:
**EP-A- 0 294 300**
**GB-A- 2 059 403**
**US-A- 4 065 551**
**US-A- 4 444 740**
**US-A- 4 763 585**

(73) Titulaire: **ALUMINIUM PECHINEY**
**Immeuble Balzac**
**10, place des Vosges**
**La Défense 5**
**F-92400 Courbevoie (FR)**

(72) Inventeur: **Barrillon, Eric**
**Résidence Saint Mury,**
**Le Berlioz**
**F-38240 Meylan (FR)**
Inventeur: **Personnet, Pierre**
**395 Rue Georges Clémenceau**
**F-73300 Saint-Jean-de-Maurienne (FR)**
Inventeur: **Bontron, Jean-Claude**
**Le Nopal,**
**Par Sainte Victoire**
**F-13100 Aix-en-Provence (FR)**

(74) Mandataire: **Mougeot, Jean-Claude et al**
**PECHINEY**
**28, rue de Bonnel**
**F-69433 Lyon Cedex 03 (FR)**

Rank Xerox (UK) Business Services
(3.10/3.09/3.3.3)

### Description

### DOMAINE TECHNIQUE DE L'INVENTION

L'invention concerne un procédé de traitement, par choc thermique en réacteur, de brasquages usés provenant notamment du démontage de cuves pour la production d'aluminium par électrolyse selon la technique Hall-Heroult. Il convient de rappeler qu'une usine de production d'aluminium de capacité 240000 T/an génère environ 4000 T/an de brasquages usés qui sont constitués par les blocs cathodiques carbonés, les joints et les garnissages latéraux réalisés en pâte carbonée, mais également par l'ensemble des réfractaires et isolants disposés sur les parois latérales et le fond du caisson métallique formant la cuve d'électrolyse. Après usage, ces produits de garnissage sont fortement imprégnés de produits nocifs, tels que des fluorures sodiques ou sodo-alumineux solubles, et des cyanures qu'il faut insolubiliser ou détruire avant mise en décharge ou réutilisation.

### ETAT DE LA TECHNIQUE

On a déjà décrit des procédés de traitement des vieilles brasques par voie humide comportant un broyage suivi d'une lixiviation par une liqueur alcaline par exemple dans le brevet US 4 052 288 Aluminium Péchiney ou le brevet US 4 113 831 Kaiser.

Ces procédés, qui nécessitent la mise en oeuvre de moyens importants, se limitent au seul traitement des parties carbonées des brasques qu'il convient préalablement de séparer des parties non carbonées formées par les réfractaires et isolants.

On connaît également des procédés de traitement par voie thermique opérant généralement en lit fluidisé et basés soit sur une pyrohydrolyse à plus de 1000° C des brasquages usés selon US 4 065 551 Elkem, ou US 4 113 832 et US 4 116 809 Kaiser, soit sur une simple combustion à l'air ou en atmosphère oxydante des éléments carbonés, à une température d'environ 800° C, suffisante pour décomposer les cyanures sans provoquer de dégagement important des composés fluorés volatils... selon US 4 053 375 Reynolds ou selon l'article de L.C. Blayden et S.G. Epstein, Journal of Metals, Juillet 1984 page 24.

En fait tous les procédés et dispositifs utilisant la voie thermique sont limités dans leurs possibilités par la nature et la composition des brasquages à traiter. En effet, en raison de la fusion de certains composés eutectiques se formant au cours de la combustion, les particules de brasques ont une forte tendance à s'agglomérer. Il devient rapidement impossible d'éviter leur prise en masse et par suite d'entretenir un lit fluidisé et a fortiori un lit dense si la combustion est réalisée par exemple en four tournant à temps de résidence important. Ce phénomène d'agglomération déjà sensible avec les charges de brasques constituées uniquement de produits carbonés est fortement accentué avec les charges contenant des oxydes réfractaires et notamment de la silice dont la teneur pondérale ne doit pas dépasser 3 ou 4 %, comme il ressort de l'article de E.R. Cutshall et L.O. Daley, Journal of Metals, Novembre 1986, page 37 table II.

La variante consistant, à réaliser la combustion en réacteur à lit fluide circulant telle que décrite dans le "Technical Paper" n° A 87-14, The Metallurgical Society of AIME, page 3, 1987 AIME Annual Meeting, ou dans US 4 763 585, Ogden, permet de mieux maîtriser ce problème d'agglomération. Ainsi US 4 763 585 met en oeuvre dans un réacteur à lit fluide circulant des brasques carbonées en mélange avec un additif constitué d'oxydes réfractaires finement broyés. Cet, additif doit rester inerte lors de la combustion, c'est-à-dire ni réagir ni fondre au contact des déchets carbonés dans la plage de température choisie généralement, comprise entre 760° C et 1200° C. Selon la dimension des grains d'oxyde broyés le temps de séjour dans le réacteur peut varier de quelques secondes à 1 heure. L'enrobage des grains de brasques carbonées par l'additif de réfractaire pulvérulent empêche les collages superficiels de grain lors de la combustion à l'air. Toutefois, là encore, le problème de l'agglomération n'est résolu que dans la mesure où l'on traite des brasquages carbonés ou du moins des brasquages provenant de garnissages à très faible teneur en silice, donc essentiellement à base d'alumine dont la durée de vie est nettement inférieure à celle des garnissages modernes en silico-alumineux préformés.

### PROBLEME POSE

Sachant que ces brasques usées contiennent des quantités importantes de dérivés fluorés (jusqu'à 200 kg de fluor contenu par tonne), des produits sodiques (jusqu'à 200 kg de Na contenu par tonne), des quantités non négligeables de cyanures (jusqu'à 10 kg par tonne) et que par ailleurs ces éléments nocifs pour l'environnement se retrouvent aussi bien dans la partie carbonée du garnissage interne de la cuve d'électrolyse que dans la partie du briquetage silico-alumineux constituant le garnissage isolant thermique des cuves modernes, il s'est avéré nécessaire de concevoir un procédé industriel,

- capable de traiter dans des conditions économiques ces brasques usées quelle que soit leur teneur en silice, sans provoquer notamment d'agglomération.
- offrant évidemment toute sécurité pour l'environnement, c'est-à-dire assurant lors du traitement une décomposition totale des cyanures et une insolubilisation quasi complète des florures.

## OBJET DE L'INVENTION

Le procédé selon l'invention consiste à chauffer brutalement et pendant un temps très court les brasques usées, à une température suffisante pour permettre la décomposition des cyanures, et de préférence en présence d'un additif pulvérulent réactif, c'est-à-dire susceptible de se combiner chimiquement avec les produits fluorés imprégnant les brasques, pour former des composés stables et insolubles tels que $CaF_2$, les composés binaires, ternaires ou quaternaires de NaF, $CaF_2$, CaO, $SiO_2$, $Al_2O_3$, $CaSO_4$, $Na_2SO_4$, du type néphéline, haüyne ou autre.

Plus précisément, l'objet de l'invention est un procédé de traitement thermique, après broyage, des brasquages usés provenant notamment des cuves d'électrolyse Hall-Héroult et en présence d'un additif pulvérulent caractérisé en ce que :

- on réalise un mélange intime des brasquages broyés à une taille de particule inférieure à 5mm, constitués à la fois de produits carbonés et de produits silico-alumineux imprégnés de composés minéraux fluorés, et d'un additif minéral susceptible de se combiner à chaud, avec ou sans fusion, avec les composés fluorés d'imprégnation pour former de nouveaux composés stables et insolubles.
- on injecte ledit mélange dans un flux gazeux circulant à la partie supérieure d'un réacteur à une température T comprise entre 1100° C et 1800° C.
- On règle entre 0,3 et 3 secondes le temps de contact des particules solides du mélange avec le flux gazeux circulant à une vitesse d'au moins 1m/seconde de telle sorte que lesdites particules atteignent une température t d'au moins 750° C avant leur extraction à la base du réacteur avec le flux gazeux.
- On maintient la température du flux gazeux, mesurée à la base du réacteur, à une valeur de consigne To telle que T > To ≥ t par exemple par ajustement du débit pondéral de mélange pulvérulent injecté dans le flux gazeux à la température T ou par ajustement du débit de gaz combustible conditionnant la température T du flux gazeux à débit pondéral constant de mélange pulvérulent.
- En sortie de réacteur, après refroidissement, on sépare le flux gazeux des particules solides constituant alors un résidu insoluble.

Ainsi lors des essais visant à mettre au point un procédé thermique de neutralisation des agents polluants contenus dans les brasquages usés avec notamment la destruction des cyanures (jusqu'à 1% en poids) et l'insolubilisation des composés fluorés (jusqu'à 20 % de fluor en poids) principalement des fluorures alcalins et alcalino-terreux tels que NaF, $CaF_2$, $AlF_3$, il s'est confirmé que la difficulté majeure résidait dans la prévention de ce phénomène d'agglomération particulièrement sensible lorsque ces brasquages usés contiennent du sodium et du silicium (généralement à l'état de $SiO_2$) dont les teneurs pondérales peuvent atteindre respectivement 20 % et 25 %.

La caractéristique essentielle du procédé selon l'invention repose sur le constat qu'il est possible de réaliser, sans prise en masse de la charge de brasquage usés consécutive à une éventuelle fusion des particules, les réactions de dépollution consistant, à détruire les cyanures et à insolubiliser les composés fluorés d'imprégnation par recombinaison chimique notamment avec l'additif. Cela, en créant un choc thermique sur les particules solides du mélange mises brutalement en contact, pendant un temps très court, de l'ordre de 0,3 à 3 secondes, avec un flux gazeux à une température T fixée de préférence entre 1200°C et 1700°C. Le flux gazeux chaud est le produit de la combustion d'un gaz carburant tel que méthane, butane ou gaz naturel, en présence d'air, d'oxygène ou leur mélange. Le choc thermique ainsi créé permet la décomposition des cyanures et la recombinaison des agents fluorés d'imprégnation quasi instantanément alors que la température dans les particules solides reste inférieure à celle du flux gazeux et généralement comprise entre 800°C et 1200°C. Le ramollissement des particules solides par fusion partielle, lié notamment à la formation de composés eutectiques fusibles, n'est pas gênant dans la mesure où l'on empêche tout contact prolongé et donc tout collage entre particules en créant une agitation suffisante dans la chambre de réaction. Cette agitation est obtenue en réglant la vitesse du flux gazeux à une valeur suffisante, au moins 1 m/seconde à la température de traitement considérée.

En plus de la température T et de la vitesse du flux gazeux conditionnées par le réglage des débits de gaz comburant et carburant, il convient aussi de fixer le temps de séjour moyen des particules dans la chambre de réaction. La plage retenue de 0,3 à 3 secondes est le meilleur compromis pour un traitement efficace de brasques de composition très différentes, dans la limite de teneurs maximales acceptables (Na

≤ 20 % et Si ≤ 25 %), nécessitant un échauffement des particules du mélange à une température d'au moins 750°C et de préférence comprise entre 800°C et 1200°C pour assurer une cinétique suffisante des réactions de recombinaison sans provoquer une fusion franche des particules avec risque de prise en masse. Le temps de séjour des particules est non seulement fonction de la vitesse du flux gazeux circulant mais aussi de paramètres plus technologiques comme les dimensions de la chambre de réaction généralement de forme conique ou cylindro-conique ainsi que la trajectoire du flux gazeux circulant liée au mode d'injection choisi, donc aux caractéristiques de l'injecteur.

L'adaptation des caractéristiques du mélange, en particulier, sa composition et sa granulométrie est aussi essentielle pour la mise en oeuvre du procédé. Ainsi les brasquages usés sont, broyés pour obtenir des particules de dimension inférieure à 5 mm et de préférence inférieure à 2 mm. Par ailleurs l'additif minéral pulvérulent mélangé aux brasquages broyés dans la proportion pondérale de 0 à 50 % du mélange final et susceptible de se combiner chimiquement avec les produits d'imprégnation, notamment avec les fluorures pour former des composés stables et insolubles, est de préférence du kaolin, du $CaSO_4$ anhydre, de la chaux ou leur mélange, s'agissant de matériaux réactifs peu coûteux et très disponibles. Pour accroître la réactivité de l'additif pulvérulent, de granulométrie comprise entre 0 et 1 mm, il convient de le mélanger intimement aux brasquages broyés et une variante avantageuse dans la préparation du mélange peut consister à introduire l'additif dans les brasquages grossièrement broyés et à terminer le broyage sur le mélange jusqu'à l'obtention de la granulométrie requise pour les particules de brasquage.

Tous ces paramètres ayant été examinés et fixés par l'expérimentation, il s'est avéré dans la mise en oeuvre de l'invention que l'on pouvait contrôler, en continu et avec précision, le traitement thermique de quantités importantes de brasquages usés assurant au procédé une grande fiabilité et une grande souplesse de fonctionnement à l'échelle industrielle. Il est en effet possible au moyen du système échangeur flux gazeux/matière solide, entre l'entrée et la sortie du réacteur, de stabiliser le régime de marche du réacteur par maintien d'une valeur de consigne To de la température du flux gazeux mesurée avant sa sortie de la chambre de réaction à la partie inférieure du réacteur. Il suffit pour cela de modifier en fonction des variations de la température par rapport à la température de consigne To, soit le débit pondéral du mélange pulvérulent injecté dans le réacteur, soit la température du flux gazeux à la partie supérieure du réacteur par réglage du débit de gaz combustible. Ces modes de contrôle et régulation en continu du traitement thermique des brasquages usés ne sont en fait efficaces que dans la mesure où les dispositifs utilisés, et en particulier le réacteur avec son injecteur, sont bien adaptés comme c'est le cas du dispositif réalisé par les Ets VICARB et employé pour mettre en oeuvre le procédé dans sa version préférée.

Finalement le flux gazeux chargé de particules solides est extrait à la base du réacteur où après refroidissement le flux gazeux est séparé des particules solides formant un résidu insoluble, alors que le flux gazeux dépoussiéré est rejeté à l'atmosphère après captation de la petite fraction de gaz fluorés qu'il contient. L'efficacité du traitement d'insolubilisation est contrôlé par prélevement d'échantillons du résidu et lixiviation selon la norme F. X31-210. Les dosages de CN et F sont effectués sur les jus de lixiviation, les teneurs en cyanure et fluor solubilisés rapportées au poids de résidu, devant rester inférieures respectivement à 0,01 % et à 0,05 % - 0,3 % selon les normes nationales en vigueur.

## MISE EN OEUVRE DU PROCEDE

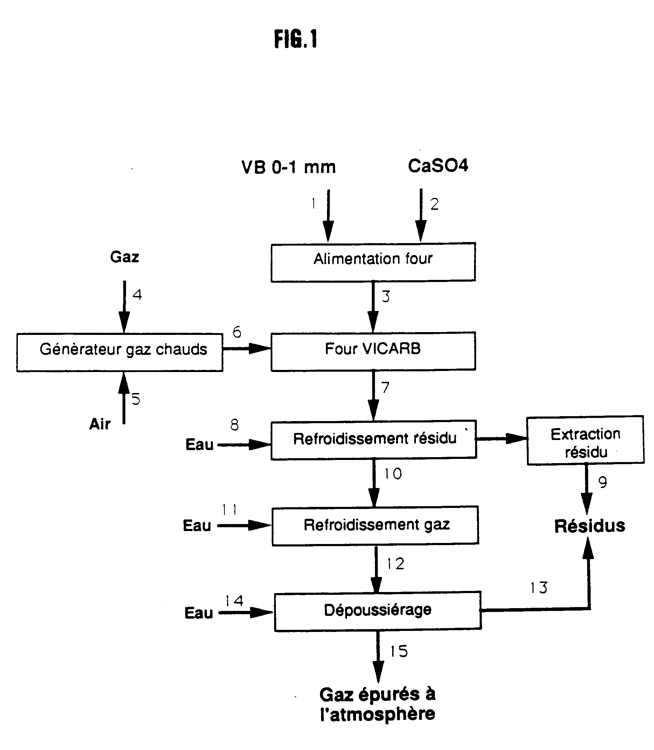

Le procédé sera mieux compris à partir de la description de sa mise en oeuvre dans sa version préférée en s'appuyant sur le flow sheet de la figure 1.

Le mélange pulvérulent contenant au moins 50 % en poids de brasques broyées (1) de granulométrie 0 - 1 mm additionnée de $CaSO_4$ anhydre (2) ou de Kaolin ou de chaux ou de leur mélange, est extrait à la base d'une trémie de stockage par un transporteur-doseur à vis à vitesse de rotation variable. Ce doseur à vis est relié (3) à la partie supérieure d'un réacteur cylindrique type VICARB muni d'un injecteur de gaz, selon modèle breveté (EP 0 171 316), faisant office de générateur de flux gazeux à une température T choisie de préférence entre 1200°C et 1700°C par réglage de la combustion du mélange gaz carburant (4) air (5). Par ailleurs le mélange pulvérulent, dont le débit dans le cas présent peut varier au moyen de la vis à vitesse réglable entre 50 kg/heure et 300 k/heure, doit former avec le flux gazeux une suspension dont la concentration est comprise entre 0,1 et 1,5 Kg par $Nm^3$ et de préférence entre 0,15 et 1 Kg par $Nm^3$.

Le mélange pulvérulent, dosé (3) est injecté au centre d'un vortex formé par le flux de gaz chauds (6) arrivant tangentiellement au sommet de la chambre cylindrique de réaction et animé d'un mouvement tourbillonnaire. Pour obtenir une bonne dispersion des particules du mélange dans le flux gazeux et une bonne agitation la vitesse du flux est réglé à 6 m/seconde et compte tenu des dimensions de la chambre de réaction (diamètre 0,25 mètre et hauteur 3 mètres) le temps de séjour correspondant est de 0,5

4

seconde. Selon la température T choisie à l'entrée du réacteur, généralement comprise entre 1200°C et 1700°C, et pour un temps de séjour moyen de l'ordre de 0,5 seconde des particules solides, dont le débit pondéral peut varier de 50 à 300 kg/h, l'on atteint une température d'au moins 750°C et généralement de 800°C à 1200°C pour ces particules solides avant sortie du réacteur et refroidissement. Parallèlement le contrôle de la température To du flux gazeux mesurée dans la même zone montre que To varie comme t entre 800°C et 1200°C selon le régime thermique choisi et conformément à la relation T>To≧t. Une fois la valeur de To fixée par exemple 850° C les écarts de température ΔT par rapport à cette valeur de consigne sont corrigés par adaptation du débit de matière pulvérulent injectée au moyen de la vis d'alimentation à vitesse de rotation variable asservie à un dispositif de mesure et d'enregistrement des variations de température d'amplitude supérieure à ± 5°C par rapport à la température de consigne To = 850° C.

Pour limiter le risque de collage des particules sur la paroi intérieure de la chambre de réaction de forme cylindrique dont la température peut localement dépasser 1200°C, il est avantageux de procéder à un refroidissement de ces parois par exemple par un balayage à l'air de la paroi externe.

Le flux gazeux (7) à la sortie du réacteur est séparé des particules solides qui sont refroidies et piègées en tombant dans un bac de rétention (8) à eau placé sous le réacteur dans le prolongement de la chambre de réaction. Après extraction du bac on obtient un 1er résidu solide. Le flux gazeux (10) est canalisé vers un dispositif de refroidissement par vaporisation d'eau (11) où il est refroidi (12) aux environs de 70-80°C avant d'entrer dans un filtre à ruissellement d'eau (17) pour être débarassé de ses poussières (13) qui constituent un 2ème résidu solide, avant rejet à l'atmosphère (15).

Les 2 résidus solides, issus de la double séparation gaz/solide associée à un double refroidissement, sont mélangés et le résidu final est soumis au contôle de dépollution, à savoir un contrôle des teneurs en CN et F à partir des échantillons de résidu prélèvés et lixiviés selon la norme Française X 31-210.

**EXEMPLES D'APPLICATION :**

Ils concernent 4 compositions de mélanges homogène de 1000 Kg de granulomètrie 0 - 1 mm mettant en oeuvre des brasquages broyés avec les teneurs pondérales suivantes :

| Na% = 14,0 | F% = 9,14 |
|---|---|
| Si% = 11,0 | CN% = 0,08 |

Ces brasquages ont été mélangés successivement avec les additifs suivants :

| Exemple 1 | $CaSO_4$ anhydre (anhydrite) |
|---|---|
| Exemple 2 | Chaux |
| Exemple 3 | Kaolin + $CaSO_4$ anhydre |
| Exemple 4 | Aucun additif. |

Les principales caractéristiques opératoires et les résultats des tests de dépollution sont indiqués dans le tableau 1 ci-après.

TABLEAU 1

| EXEMPLES N° | 1 | 2 | 3 | 4 |
|---|---|---|---|---|
| Mélange initial total        Kg | 1 000 | 1 000 | 1 000 | 1 000 |
| dont : | | | | |
| Vieilles Brasques            Kg | 600 | 600 | 500 | 1 000 |
| Additif : CaSO   anhydre   Kg | 400 | 0 | 100 | 0 |
| Kaolin                       Kg | 0 | 0 | 400 | 0 |
| Chaux                        Kg | 0 | 400 | 0 | 0 |
| Traitement Thermique | | | | |
| Débit mélange          Kg/Heure | 136,4 | 214,3 | 107,1 | 54,5 |
| Température flux gazeux     °C | | | | |
| Haut        T | 1 400 | 1 500 | 1 400 | 1 600 |
| Bas        To | 850 | 850 | 850 | 1 200 |
| Vitesse flux gazeux        m/s | 6 | 6 | 6 | 8 |
| Temps de séjour moyen seconde | 0,5 | o,5 | 0,5 | 0,35 |
| Taux de dépollution du résidu | | | | |
| Aspect | Poudre | Poudre | Poudre | Poudre |
| CN lixiviable total        % | ‹0,01 | ‹0,01 | ‹0,01 | ‹0,01 |
| F lixiviable total         % | 0,05 | 0,17 | 0,41 | 0,31 |

On constate un excellent taux de dépollution du résidu avec les mélanges utilisant notamment $CaSO_4$ anhydre et CaO comme additifs et celà dans des conditions de traitement thermique tout à fait industrielles.

**Revendications**

1.  Procédé de traitement thermique, après broyage, des brasquages usés provenant notamment des cuves d'électrolyse Hall-Héroult et en présence d'un additif pulvérulent caractérisé en ce que, on réalise un mélange intime des brasquages broyés à une taille de particule inférieure à 5 mm, constitués à la fois de produits carbonés et de produits silico-alumineux imprégnés de composés minéraux fluorés, et d'un additif minéral pulvérulent susceptible de se combiner à chaud, avec ou sans fusion, avec les composés fluorés d'imprégnation pour former de nouveaux composés stables et insolubles.

. On injecte ledit mélange dans un flux gazeux circulant à la partie supérieure d'un réacteur à une température T comprise entre 1100°C et 1800°C.

. On règle entre 0,3 et 3 secondes le temps de contact des particules solides du mélange avec le flux gazeux circulant à une vitesse d'au moins 1m/seconde, de telle sorte que lesdites particules atteignent une température t d'au moins 750°C avant leur extraction de la base du réacteur avec le flux gazeux.

. On maintient la température du flux gazeux, mesurée à la base du réacteur, à une valeur de consigne To telle que $T > To \geq t$.

. En sortie de réacteur, après refroidissement, on sépare le flux gazeux des particules solides constituant alors un résidu insoluble.

2. Procédé selon la revendication 1 caractérisé en ce que les composés fluorés d'imprégnation sont principalement des fluorures alcalins et alcalino-terreux tels que $NaF$, $CaF_2$, $AlF_3$.

3. Procédé selon la revendication 1 caractérisé en ce que dans les brasquages traités les teneurs pondérales maximales en fluor, cyanure, silicium et sodium sont respectivement de 20 %, 1%, 25% et 20%.

4. Procédé selon la revendication 1 caractérisé ce que, la dimension des particules de brasquages usés, après broyage est inférieure à 2 mm.

5. Procédé selon la revendication 1 caractérisé en ce que la dimension des particules d'additif est inférieure ou égale à 1 mm.

6. Procédé selon la revendication 1 ou 5 caractérisé en ce que la proportion pondérale d'additif dans le mélange varie entre 0 et 50%.

7. Procédé selon l'une quelconque des revendications 1, 5, ou 6 caractérisé en ce que l'additif est de préférence du Kaolin, du $CaSO_4$ anhydre, du CaO ou leur mélange.

8. Procédé selon revendication 1 caractérisé en ce que la température T du flux gazeux formé par les gaz de combustion circulant à la partie supérieure du réacteur est fixée de préférence entre 1200°C et 1700°C.

9. Procédé selon revendication 1 caractérisé en ce que la température t des particules à la base du réacteur avant extraction est de préférence comprise entre 800°C et 1200°C.

10. Procédé selon revendication 1 caractérisé en ce que le mélange pulvérulent injecté dans le réacteur forme avec le flux gazeux circulant une suspension dont la concentration est comprise entre 0,1 et 1,5 Kg par $Nm^3$ et de préférence entre 0,15 et 1 kg par $Nm^3$.

11. Procédé selon revendication 1 caractérisé en ce que la température To de consigne est généralement fixée entre 800°C et 1200°C.

12. Procédé selon revendication 1 ou 11 caractérisé en ce que le maintien de la température de consigne To est obtenu par ajustement du débit pondéral du mélange pulvérulent injecté dans le flux gazeux à la température T.

13. Procédé selon revendication 12 caractérisé en ce que l'ajustement du débit pondéral du mélange pulvérulent est obtenu par variation de la vitesse de la vis d'alimentation asservie au dispositif de contrôle des écarts $\Delta T$ de température du flux gazeux, à la base du réacteur par rapport à To.

14. Procédé selon revendication 1 ou 11 caractérisé en ce que le maintien de la température de consigne To est obtenu par ajustement du débit de gaz combustible conditionnant la température du flux gazeux à débit pondéral constant de mélange pulvérulent.

15. Procédé selon revendication 1 caractérisé en ce que les mélanges pulvérulents sont injectés au centre d'un vortex formé par le flux de gaz chaud circulant arrivant tangentiellement dans le sommet du réacteur et animé d'un mouvement tourbillonnaire.

16. Procédé selon revendication 1 caractérisé en ce que le résidu insoluble issu du traitement thermique du mélange est obtenu après une double séparation gaz/solide associée à un double refroidissement.

**Claims**

1. A process for the heat treatment, after grinding, of spent pot linings more particularly obtained from Hall-Héroult electrolytic cells and in the presence of a pulverulent addictive, characterised in that a thorough mixture is formed of the ground pot linings, with a particle size of less than 5 mm, and constituted both by carbon-containing products and silico-aluminous products impregnated with fluorine-containing mineral compounds, and by a pulverulent mineral additive able to combine hot, with or without melting, with fluorine-containing compounds of impregnation in order to form new stable and insoluble compounds:

   . Said mixture is injected onto a gas flow circulating in the upper part of a reactor at a temperature T of between 1100°C and 1800°C;

   . The contact time of the solid particles of the mixture with the circulating gas flow is regulated at between 0.3 and 3 seconds and at a speed of at least 1m/second in such a way that said particles reach a temperature t of at least 750°C prior to their extraction from the base of the reactor with the gas flow;

   . The temperature of the gas flow, measured at the base of the reactor, is maintained at a reference value To such that T > To ≥ t;

   . At the reactor outlet, after cooling, the gas flow is separated from the solid particles, thus constituting an insoluble residue.

2. A process according to Claim 1, characterised in that the fluorine-containing compounds of impregnation are mainly alkali metal fluorides and alkaline earth fluorides such as NaF, $CaF_2$ and $AlF_3$.

3. A process according to Claim 1, characterised in that in the treated pot linings, the maximum contents, by weight, of fluorine, cyanide, silicon and sodium are 20%, 1%, 25% and 20% respectively.

4. A process according to Claim 1, characterised in that the size of the spent pot lining particles, after grinding, is less than 2 mm.

5. A process according to Claim 1, characterised in that the size of the additive particles is less than or equal to 1 mm.

6. A process according to Claims 1 or 5, characterised in that the proportion of additive, by weight, in the mixture varies between 0 and 50%.

7. A process according to any one of Claims 1, 5 or 6, characterised in that the additive is preferably kaolin, anhydrous $CaSO_4$, CaO or a mixture thereof.

8. A process according to Claim 1, characterised in that the temperature T of the gas flow formed by the flue gases circulating in the upper part of the reactor is preferably fixed at between 1200 and 1700°C.

9. A process according to Claim 1, characterised in that the temperature t of the particles at the base of the reactor prior to extraction is preferably between 800°C and 1200°C.

10. A process according to Claim 1, characterised in that the pulverulent mixture injected into the reactor forms, with the circulating gas flow a suspension whose concentration is between 0.1 and 1.5 $kg/Nm^3$ and preferably between 0.15 and 1 $kg/Nm^3$.

11. A process according to Claim 1, characterised in that the reference temperature To is usually between 800°C and 1200°C.

12. A process according to Claim 1 or Claim 11, characterised in that the reference temperature To is maintained by adjusting the flow rate, by weight, of the pulverulent mixture injected into the gas flow to temperature T.

13. A process according to Claim 12, characterised in that the pulverulent mixture flow, by weight, is adjusted by varying the speed of the feed screw dependent on the device for checking the temperature variations $\Delta T$ of the gas flow, at the base of the reactor and relative to To.

14. A process according to Claim 1 or Claim 11, characterised in that the reference temperature To is maintained by adjusting the flow rate of the flue gas conditioning the gas flow temperature to the constant flow rate, by weight, of the pulverulent mixture.

15. A process according to Claim 1, characterised in that the pulverulent mixtures are injected into the centre of a vortex formed by the circulating hot gas flow arriving tangentially at the top of the reactor and which is given a whirling movement.

16. A process according to Claim 1, characterised in that the insoluble residue resulting from the heat treatment of the mixture is obtained after a double gas/solid separation associated with a double cooling operation.

## Patentansprüche

1. Verfahren zur Wärmebehandlung von zermahlenen, verbrauchten Auskleidungen, die insbesondere aus Elektrolyse-Zellen nach dem Hall-Heroult-Verfahren stammen, in Gegenwart eines feinpulverigen Zusatzstoffs, dadurch gekennzeichnet, daß die zu einer Partikelgröße unter 5 mm zermahlenen Auskleidungen, die zugleich aus kohlenstoffhaltigen Substanzen und aus tonerdesilikathaltigen Substanzen bestehen, die mit fluoridierten mineralischen Verbindungen getränkt sind, mit einem feinpulverigen mineralischen Zusatzstoff innig vermischt werden, der sich mit oder ohne Schmelzen mit den fluoridierten Tränkungsverbindungen in der Wärme verbinden kann, um neue beständige und unlösliche Verbindungen zu bilden,

. das Gemisch in einen Gasstrom eingespritzt wird, der im oberen Teil eines Reaktors bei einer Temperatur T zwischen 1100°C und 1800°C zirkuliert,

. die Berührungszeit der festen Partikel des Gemischs mit dem bei einer Geschwindigkeit von mindestens 1m/s zirkulierenden Gasstrom zwischen 0,3 und 3 Sekunken eingestellt wird, so daß die Partikel eine Temperatur t von mindestens 750°C vor ihrer Entnahme aus der Basis des Reaktors mit dem Gasstrom erreichen,

. die an der Basis des Reaktors gemessene Temperatur des Gasstroms bei einem Sollwert To aufrechterhalten wird, so daß $T > To \geq t$ und

. beim Ausgang aus dem Reaktor nach dem Abkühlen der Gasstrom von den festen Partikeln getrennt wird, die dann einen unlöslichen Rückstand bilden.

2. Verfahren nach Anspruch 1, dadurch gekennzeichnet, daß die fluoridierten Tränkungsverbindungen haptsächlich alkalische und erdalkalische Fluoride wie NaF, $CaF_2$, $AlF_3$ sind.

3. Verfahren nach Anspruch 1, dadurch gekennzeichnet, daß die maximalen Massegehalte an Fluor, Zyanid, Silizium und Natrium in den behandelten verbrauchten Auskleidungen 20 %, bzw. 1 %, bzw. 25 % bzw. 20 % sind.

4. Verfahren nach Anspruch 1, dadurch gekennzeichnet, daß die Größe der Partikel der verbrauchten Auskleidungen nach dem Zermahlen kleiner als 2 mm ist.

5. Verfahren nach Anspruch 1, dadurch gekennzeichnet, daß die Größe der Partikel des Zusatzmittels kleiner oder gleich 1 mm ist.

6. Verfahren nach Anspruch 1 oder 5, dadurch gekennzeichnet, daß der Gewichtsanteil des Zusatzmittels im Gemisch zwischen 0 und 50 % variiert.

7. Verfahren nach einem der Ansprüche 1, 5 oder 6, dadurch gekennzeichnet, daß das Zusatzmittel vorzugsweise Kaolin, wasserfreies $CaSO_4$, CaO oder deren Gemisch ist.

**8.** Verfahren nach Anspruch 1, dadurch gekennzeichnet, daß die Temperatur T des durch die im oberen Teil des Reaktors zirkulierenden Verbrennungsgase gebildeten Gasstroms vorzugsweise zwischen 1200°C und 1700°C festgelegt ist.

**9.** Verfahren nach Anspruch 1, dadurch gekennzeichnet, daß die Temperatur t der Partikel an der Basis des Reaktors vor der Herausnahme zwischen 800°C und 1200°C beträgt.

**10.** Verfahren nach Anspruch 1, dadurch gekennzeichnet, daß das in den Reaktor eingespritzte Pulvergemisch mit dem zirkulierenden Gasstrom eine Suspension ergibt, deren Konzentration zwischen 0,1 und 1,5 Kg/Nm$^3$ und vorzugsweise zwischen 0,15 und 1 kg/Nm$^3$ liegt.

**11.** Verfahren nach Anspruch 1, dadurch gekennzeichnet, daß die Solltemperatur To üblicherweise zwischen 800°C und 1200°C eingestellt wird.

**12.** Verfahren nach Anspruch 1 oder 11, dadurch gekennzeichnet, daß die Solltemperatur To dadurch erhalten wird, daß der gewichtsbezogene Durchsatz des in den Gasstrom eingespritzten Pulvergemisches auf die Temperatur T geregelt wird.

**13.** Verfahren nach Anspruch 12, dadurch gekennzeichnet, daß die Regelung des gewichtsbezogenen Durchsatzes des Pulvergemisches durch die Veränderung der Geschwindigkeit der Zuführungsschnekke erhalten wird, die auf die Steuereinrichtung für die Temperaturschwankungen ΔT des Gasstroms in bezug auf To an der Reaktorbasis anspricht.

**14.** Verfahren nach Anspruch 1 oder 11, dadurch gekennzeichnet, daß die Solltemperatur To durch Regelung des Brenngasdurchsatzes erhalten wird, der die Temperatur des Gasstroms bei konstantem gewichtsbezogenem Durchsatz des Pulvergemisches bedingt.

**15.** Verfahren nach Anspruch 1, dadurch gekennzeichnet, daß die Pulvergemische in die Mitte eines Strudels eingespritzt werden, der durch den warmen Gasstrom gebildet ist, der tangential im Scheitel des Reaktors eintrifft und in einer Wirbelbewegung bewegt wird.

**16.** Verfahren nach Anspruch 1, dadurch gekennzeichnet, daß der aus der Wärmebehandlung stammende unlösliche Rückstand nach einer doppelten Gas/Festkörper-Trennung mit doppelter Abkühlung erhalten wird.

# FIG.1

VB 0-1 mm          CaSO4

Gaz

Alimentation four

Générateur gaz chauds → Four VICARB

Air

Eau → Refroidissement résidu → Extraction résidu

Eau → Refroidissement gaz          Résidus

Eau → Dépoussiérage

**Gaz épurés à l'atmosphère**